# EUROPEAN PATENT SPECIFICATION

(11) **EP 2 721 377 B1**
(45) Date of publication and mention of the grant of the patent: **31.05.2017**
(21) Application number: 11767294.9
(22) Date of filing: 17.06.2011
(51) Int. Cl.: G01F 23/26, B65F 1/14

(54) **MEASURING DEVICE, CONTAINER MEANS AND SYSTEM FOR MONITORING AND MANAGING CONTAINER MEANS**
MESSVORRICHTUNG, BEHÄLTERVORRICHTUNG UND SYSTEM ZUR ÜBERWACHUNG UND HANDHABUNG VON BEHÄLTERVORRICHTUNGEN
DISPOSITIF DE MESURE, MOYENS DE CONTENANCE ET SYSTÈME DE SURVEILLANCE ET DE GESTION DE MOYENS DE CONTENANCE

(43) Date of publication of application: 23.04.2014
(73) Proprietor: Cefriel - Societa' Consortile A Responsabilita' Limitata, 20133 Milano (MI) (IT); AMSA S.p.A. Azienda Milanese Servizi Ambientali, 20132 Milano (IT)
(72) Inventor: DI GIUGNO, Mario, I-23851 Galbiate (LC) (IT); GIOVANELLI, Flavio, I-20090 Cesano Boscone (MI) (IT); PEREGO, Mattia, I-21013 Gallarate (VA) (IT); TIRABOSCHI, Simone, I-24064 Grumello del Monte (BG) (IT); VILLA, Pietro, I-24128 Bergamo (BG) (IT)
(74) Representative: Siniscalco, Fabio
(86) International application number: PCT/IB2011/052661
(87) International publication number: WO 2012/172395

(56) References cited:
- WO-A1-2011/077187
- DE-A1- 19 916 979
- US-A- 4 099 167
- US-A1- 2007 125 792

## Description

The present invention relates to a measuring device, container means and system for monitoring and managing container means that is suitable for containing various objects, in multiple areas of application.

In particular, the measuring device according to the invention enables filling status and/or the filling level of the container means to be measured in contexts in which the conferred objects are heterogeneous and unpredictable from the point of view of type, shape and material.

In particular, the container means is suitable for containing non-homogenous objects of various nature, for example unsorted waste, such as urban waste.

Skips are known of rather large dimensions for collecting urban waste, which are provided with sensors comprising load cells or extensimeter elements that are suitable for measuring the weight of the waste contained in the interior of the skip. Such skips are able to send a signal showing the weight contained in the interior of the skip. This signal can be received by an approaching vehicle tasked with emptying the skips and collecting the waste.

Containers are also known for collecting waste that are provided with optical barrier sensors, or ultrasound sensors, which are suitable for supplying a signal when the filling level inside the containers reaches a set level. A system is provided for managing containers that provides for the aforesaid signal sent by the containers being received by a suitable station, which plans the route of a collection vehicle in function of the filling status of the various containers located in the urban area.

One drawback of the known containers discussed above is that they are rather complicated to construct and have rather a high cost. Further, maintenance and repair costs of possible damage to the aforesaid containers can be significant. From the financial point of view, this makes it uneconomical to adopt such sensors on the containers, or at most makes it feasible to apply such sensors only to large containers in order to be able to amortise the cost thereof. Nevertheless, containers of large dimensions that are suitable for being distributed along roads and/or large open spaces are not suitable for being placed on zones such as pavements, parks, etc.

Another drawback of known containers stems from the fact that they are not able to indicate with sufficient reliability and precision the effective filling status thereof. In particular, the presence of objects arranged inside the containers in particular positions can adversely affect measuring, thus leading to erroneous reporting of a state of total filling, that, however, is revealed to be falsified.

One object of the invention is to improve known measuring devices, known containers, in particular containers for collecting waste, and the systems for managing the containers. Another object of the invention is to supply a simple and cheap measuring device from the constructional point of view, from the management and the maintenance point of view, and which is able to indicate operating conditions or states of the container means and/or other information in a rapid, precise and efficient manner. In particular, one object of the invention is to provide a measuring device that enables the actual filling status in the container means to be measured and indicated reliably, whatever the nature and position of the object/s inside the container means.

DE19916979 discloses a method for measuring liquid level with a plurality of capacitive sensors arranged next each other along a filling section; a sensor is subjected to a measuring signal and an adjacent sensor is subjected to a phase-displaced measuring signal; the level is established in accordance with the phase displacement between the two signals.

US4099167 discloses capacitive means for measuring the level of a liquid wherein electrodes are disposed on portions of a container comprising dielectric material, an electrical signal is capacitively transmitted between the electrodes and is shunted by the presence of a liquid in close proximity to the electrode, and the shunting is detected.

US2007/125792 discloses a diaper pail which can be provided with a device or system that notifies a user when the storage bag should be replaced.

The invention is set out in the appended claim 1.

The invention can be better understood and implemented with reference to the attached drawings that illustrate some embodiments by way of non-limiting example, in which:
Figure 1 is a schematic view of an embodiment of container means provided with a measuring device according to the invention;
Figure 2 is a schematic top view of the container means in one operating mode;
Figure 3 is a schematic top view of the container means in a further operating mode;
Figure 4 is a diagram of the functional architecture of the container means;
Figure 5 is a schematic view of a further embodiment of container means according to the invention;
Figures 6 to 8 are schematic top views of a still further embodiment of container means in some steps of a possible operating mode;
Figure 9 shows schematically the interaction between the container means and a data-collection and processing centre for evaluating the filling status;
Figure 10 is a block diagram that shows the operation of an algorithm of the measuring device according to the invention;
Figure 11 is a table relating to the operation of the measuring device according to the invention.

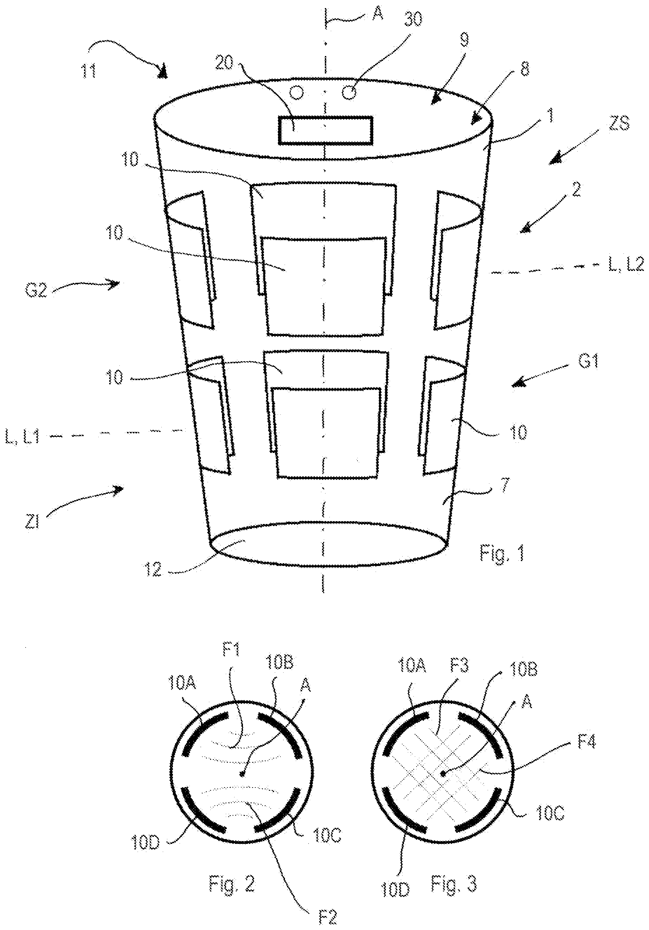

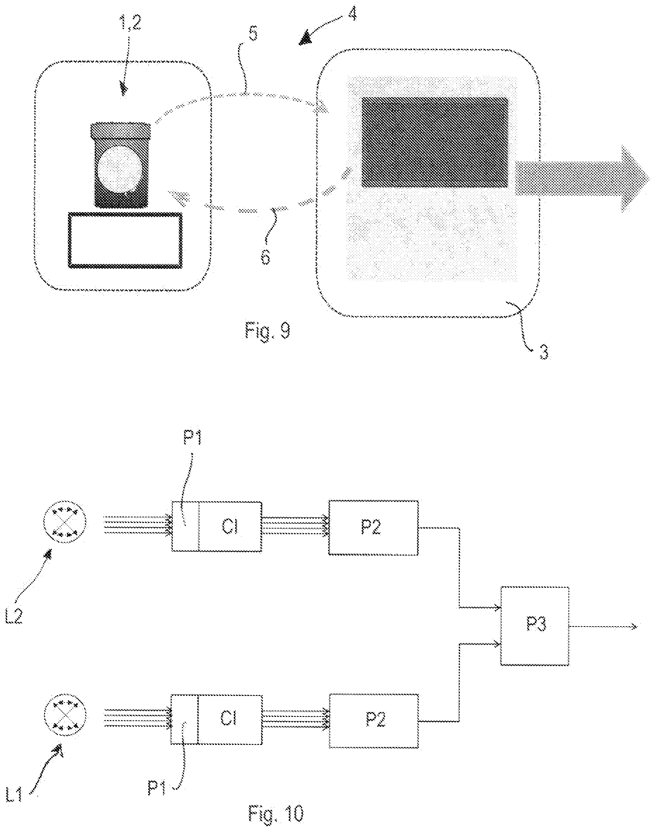

With reference to Figure 1, container means 1 is shown schematically that is provided with a measuring device 2 according to the invention that is used to measure and/or detect a filling status or condition of the container means or container 1. The measuring device 2 can be used in very many applications and/or industrial environments, to detect and/or measure the filling degree of container means 1 when the latter are intended to contain multiple objects that are heterogeneous and unpredictable from the point of view of the type, shape and material. In other words, the container means 1 can receive non-homogenous objects of various nature. The container, or a plurality of containers 1, as disclosed below, can be operationally connected to a data collection and processing centre 3, which is schematised in Figure 9. A system 4 is thus defined for monitoring and managing the container means 1 that is shown schematically in Figure 9. The system 4, in one possible and non-limiting application that is disclosed here, is used to manage waste. In particular, the containers 1 are suitable for receiving unsorted waste, such as urban waste that may contain non-homogenous objects of various nature. In this case, there is provided a plurality of containers 1 that are distributed over an urban area. The system 4 enables the filling status of each container 1 to be monitored and enables waste collection disposal operations in an urban area to be managed as well as possible.

The containers 1 are particularly suitable for being located at several points of the urban area, in particular in parks, on pavements, squares, etc. The container means 1 can have reduced dimensions such as to enable the container means 1 to be positioned on zones of any extent. In this case, the container means 1 is not bulky and does not necessarily require great space, unlike prior-art skips. The container means 1 is thus particularly suitable for receiving waste of various kinds from pedestrians and/or passers by in any zone of the town.

In particular, the container means 1 may have a height comprised between 40 cm and 140 cm, and may have a width and depth comprised between 20 cm and 80 cm. The container means may be of different sizes. For example, a first size, specified in Figure 1, has a width and a depth that are substantially the same as 50 cm, and a height that is substantially equal to 80 cm. A second size has a width and a depth that are substantially equal to 60 cm, and a height that is substantially equal to 100 cm. A third size has a width and a depth that are substantially equal to 35 cm, and a height that is substantially equal to 50 cm. Nevertheless, the container means 1 with which to associate the measuring device 2 can have the dimensions and geometrical shapes that are desired, according to the specific applications or requests.

The various parts that make up the container means 1 have great resistance to atmospheric agents, high mechanical resistance to collision, vibrations and wear and are therefore suitable for being placed in any zone of an urban area.

The system 4 is configured for performing various functions such as: detecting the occlusion of the mouth of the container 1, detecting the full or empty status of the container 1, the temporal indication of the measurement, the detection of the filling level of the container means 1, detecting a state of clogging or obstruction of the container 1, the location of the containers 1, the prompt warning of the exceeding of the filling threshold of the containers 1. Information/data/measurements 5 produced by each measuring device 2 are sent by the respective container 1 to the data collection and processing centre 3, which may comprise a departmental station 3, associated with a determined territorial fraction of the town.

The data collection and processing centre 3, in turn, collects and processes the information/data/measurements 5 to determine the filling status of each container 1.

Further, the data collection and processing centre 3 sends each container 1 signals 6 to update and remote-control the respective measuring device 2.

Below, the various components will be disclosed further in detail that are included in the measuring device 2 that enables the container 1 to communicate with the data collection and processing centre 3.

The departmental station 3, which can be configured for monitoring a plurality of containers 1 located in several zones of an area, is able to plan and program the route of one or more vehicles tasked with emptying the containers 1 and collecting the waste contained therein. Several departmental stations 3 can be provided, each having responsibility for a distinct urban area, and a central station to which all the departmental stations 3 are connected.

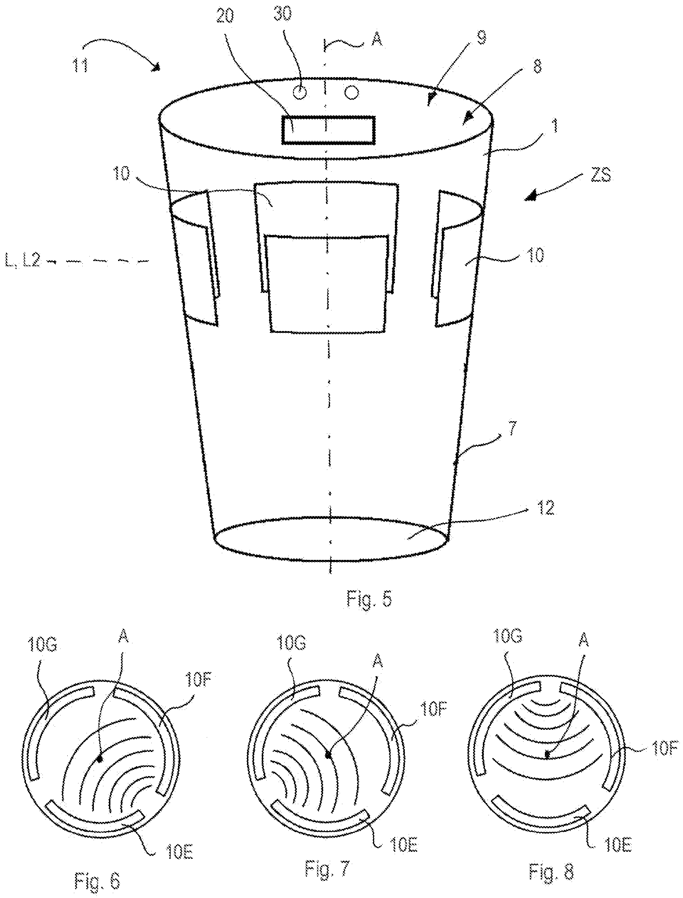

The container means 1 according to the invention, better shown in Figures 1 and 5, comprises a casing 7 that defines a containing cavity 8, bounded by a bottom surface 12 and suitable for receiving objects such as waste. The containing cavity 8 extends along a longitudinal axis A. The casing 7 is shaped in such a manner as to be able to house internally a bag or similar containing elements to receive the waste that users throw inside the container means 1. The bag enables the container means 1 to be emptied rapidly, for example by an operator. The operator removes the bag that is full of waste from the container means to transfer the waste, for example to a collecting vehicle.

The waste is introduced into the container means 1 through an opening 9 associated wit the casing 7.

The container means 1 is provided with a mouth 11 that can always be left open or may comprise a cover element, which is removably connected, or is hingable on the casing 7 in such a manner as to connect an upper part of the bag to the container means 1.

The measuring device 2 is now disclosed in greater detail that is associated with the container 1 and is configured for detecting the filling status of the containing cavity 9.

The measuring device 2 is provided with sensors comprising conducting elements 10 that are suitable for acting as capacitor armatures and are connected to a control unit 20. Substantially, the set of conducting elements 10 defines a system capacitor.

In order to detect the filling condition of the container 1, the measuring device 2 detects, by an "analogue-digital conversion device", the variation of electric capacity that is caused when in the area between two conducting elements 10 an object of a different material from air is interposed. The measuring device 2 operates correctly regardless of the type of material of which the objects placed in the container 1 consists and is based on detecting the variation of the dielectric constant in the containing cavity 8 of the container 1.

In other words, the operating principle of the device 2 is based on the variation in the electrical capacity of the aforesaid system-capacitor, through the effect of the introduction of one or more objects inside the container means 1. In particular, the measuring device 2 detects variations in the electric capacity value due to the introduction of objects inside the containing cavity 8.

When the containing cavity 8 is empty, or rather when only the bag is present, the electric capacity has a set value which substantially depends on the dielectric constant of the air. In this situation, it is possible to measure an "empty" capacity value of the system-capacitor.

The various materials of which the waste consists that are placed in the container means 1 are characterised by a dielectric constant that is different from that of the air. By measuring a variation in the capacity of the system-capacitor, it is possible to detect the presence of waste. An object is detected because introducing the object inside the containing cavity 8 causes a variation of the dielectric constant. An object can also be detected through the effect of a variation in the geometry of the equivalent capacity. This occurs if the introduced object is conductive material that causes an increase or fall in the resulting capacity. The objects that are placed in the container 1 do not by any means have to be made of metal, but can be of any materials. This highlights the extreme suitability of the container 1 and of the measuring device for being used for collecting and managing unsorted urban waste, which inherently is totally unpredictable in terms of the shape and of the material of which it is made.

Further, as can be seen better in the description, the measuring device 2 is able to recognise if there are objects in the container 1 even at a certain height from the bottom surface 12 of the containing cavity 8. For example, the measuring device 2 is able to detect the presence of an object that is suspended, i.e. jammed between the walls of the container 1 at a certain distance from the bottom of the latter, the object may be, for example, an umbrella or other object of relatively large dimensions that has been placed transversely inside the container 1 by a user. The measuring device 2 is thus much more reliable and precise than other known devices the reliability of which in detecting a filling condition is reliant on the fact that the filling has necessarily to start from the bottom and progress to the top of the skip. On the other hand, the measuring device 2 according to the invention, in one of the possible configurations disclosed further on, is able to recognise which zones - for example zones placed at a higher level or a lower level than the bottom - are gradually occupied by the waste.

Further, the measuring device 2 according to the invention, owing to the fact that it is able to operate with materials of different types, solid and non-solid, and further not necessarily metal, is much more versatile than other measuring devices that require, for correct operation, that the material be conductive or even simultaneously conductive and in liquid state so as to be able act not only as an electric conducting element but also as a further armature cooperating with the measuring armatures included in the device.

The conducting elements of the measuring device 2 are connected to the control unit 20 in such a manner that taken singly or in groups they can define armature plates of a capacitor on at least one level L, or the position of the container 1, in such a manner as to enable a filling condition or lack of filling condition of the container 1 to be detected. At least three conducting elements 10 are provided for at least one level. The conducting elements 10 are connected to the control unit 20 independently of one another. Below, two possible embodiments of the container 1 are disclosed, which correspond to two different possible measuring device 2 configurations. A first more sophisticated embodiment of the container 1, shown in Figure 1, comprises a first group G1 of conducting elements 10 arranged at a first measuring level, or lower level L1, and a second group G2 of conducting elements 10 arranged at a second measuring level, or higher level L2. The lower level L1 and the higher level L2 are associated respectively with a lower zone ZI and with a higher zone ZS, defined in the direction of the height of the container 1.

The first group G1 and the second group G2 each comprise four conducting elements 10 or sensors, distributed on the perimeter of the container 1 around the longitudinal axis A. In the embodiment, given by way of non-limiting example, of the container 1 with a circular, cylindrical or frustoconical shape, the four conducting elements 10 of each level L are distributed axial-symmetrically with respect to the longitudinal axis A. The four conducting elements 10 of each level comprise plate elements 10 distributed circumferentially in an angularly uniform manner. The plate elements 10, in the case of containers with a polygonal, for example square section, can each be distributed on a respective side of the container 1.

The aforesaid configurations enable a recognition algorithm to be implemented by which the measuring device 2 is able to recognise the presence of objects inside the container 1. Each plate-shaped element 10 comprises a metal plate 10 that may have a surface with appropriate curvature in function of the geometry of the walls that define the desired container 1.

Owing to the positions and number of the aforesaid plates 10, it is possible to make both measurements obtained between opposite plates and measurements obtained between adjacent plates by means of the recognition algorithm.

Figure 2 shows schematically the interaction between the various plates 10 of any one of the two levels, in a first possible operating mode. There are shown a first plate, 10A, a second plate 10B, a third plate 10C and a fourth plate 10D. In this first operating mode, the first plate 10A is made to interact with the adjacent second plate 10B, so as to define a first capacitor, as the first flow lines F1 show. The first capacitor defined thus is used to make a first capacitive measurement. Similarly, the third plate 10C is made to interact with the adjacent fourth plate 10D, so as to define a second capacitor, as the second flow lines F2 show. The second capacitor thus defined is used to make a second capacitive measurement.

In Figure 3 there is shown another operating mode in which plates 10 that are opposite one another are made to interact with one another. In particular, the first plate 10A is made to interact with the opposite third plate 10C, such as to define a third capacitor, as the third flow lines F3 show. The third capacitor defined thus is used to make a third capacitive measurement. Similarly, the second plate 10B is made to interact with the opposite fourth plate 10D, such as to define a fourth capacitor, as the fourth flow lines F4 show. The fourth capacitor that is thus defined is used to conduct a fourth capacitive measurement.

What has just been disclosed applies to both the plates 10 of the first level L1 and to the plates 10 of the second level L2.

The first group G1 and the second group G2 of plates 10 act in such a manner as to supply, independently and autonomously of one another, and each for the respective level, four distinct capacitive measurements: two capacitive measurements between opposite plates, which enable the general status to be estimated in a central area of the corresponding level, and two measurements between adjacent plates that enable the presence of objects to be discriminated near peripheral areas or edges of the containing cavity 8 and the general estimate to be strengthened in the presence of metal objects (which are able to confuse the measurement in the central area of the containing cavity 8). As already indicated above, the measurements performed on the lower level L1 and on the higher level L2 are absolutely autonomous; in other words the first group G1 and the second group G2 are manageable totally independently from one another. This makes it possible to discriminate the filling status of each single zone inside the containing cavity 8.

In one embodiment in the measuring device 2, only three plates 10 are provided for each of the two levels L1 and L2, as schematised in the top views of Figures 6 to 8. With reference to Figures 6 to 8 a first plate 10E, a second plate 10F and a third plate 10G are shown. The plates 10E, 10F, 10G which are schematised in Figures 6 to 8, can be considered to be part of a group of plates associated with the higher level L2 or in a manner that is completely similar to a group of plates associated with the lower level L1. The operation of the plates of the higher level L1 and of the plates of the lower level L2 are similar to one another.

Figure 6 shows a first operating step in which the first plate 10E is made to interact with the second plate 10F to make a first capacitive measurement that affects a first fraction, near thereto, of the volume inside the container 1 and the corresponding level L. In a second operating step shown in Figure 7, the first plate 10E is made to interact with the third plate 10G to make a second capacitive measurement that affects a second fraction, nearer thereto, of the volume inside the container 1 always at the level in question. Lastly, as shown in Figure 8, the second plate 10F and the third plate 10G interact to perform a third capacitive measurement that affects a third fraction, nearer thereto, of the volume inside the container 1 and still at the level in question. Owing to the three capacitive measurements that have just been mentioned, the measuring device 2 is able to detect the presence and also the position of one or more objects inside the container 1, both at the lower level L1 and at the higher level L2.

In the embodiment of the container 1 in Figure 5, the measuring device 2 comprises a single group of four plates 10, located only on the higher level L2 according to a configuration that is similar to the one disclosed above for the embodiment in Figure 1. In this case, the measuring device is configured for detecting the presence of objects only in the higher zone ZS. In this configuration, the measuring device 2 enables a condition of total filling of the container 1 to be reported. In a still further embodiment the measuring device 2 may comprise three such plates 10, rather than four, but placed only on the higher level L2 and operating according to what is disclosed for the embodiment with reference to Figures 6 to 8.

Owing to the fact that the conducting elements 10 are operationally connected to the control unit 20 in such a manner that taken singly or in groups can define armature plates of a capacitor, it is possible to perform multiple measurements by coupling or grouping together the conducting elements 10 in several possible ways. For example, the control unit 20 can, if required, drive the first plate 10A and the second plate 10B such that these together define a single first armature, whilst the third plate 10C and the fourth plate 10D together define a single second armature that is suitable for interacting with the aforesaid first armature. In a completely similar manner, the control unit can act to define other combinations of the conducting elements 10 in function of specific needs that arise from time to time. This also applies in cases in which there is a different number of conducting elements 10, not necessarily four by level.

In further embodiments of the device 2 and of the container 1 it is also possible to define more than two filling "levels", to detect discretely the filling of the containing cavity 8. Further, similarly to the embodiment already disclosed with two levels (L1, L2), also if there is a desired number N of levels, readings of the conducting elements can be autonomous and can be performed for the various levels independently of one another. In this manner, owing to the possibility of obtaining measurements of the single levels that are completely autonomous, the measuring device 2 enables the filling status of each single zone inside the containing cavity 8 to be discriminated.

The dimension and the position of the armatures 10 are chosen in function of the degree of precision and discretisation of the measurement that it is desired to obtain. The greater the number of plates or armatures 10 the less the dimension of the latter, the higher will be the resolution of the measurement and thus the greater will be the number of detectable and monitorable filling "levels".

The measuring device 2, in addition to the capacitive sensors comprising the conducting elements 10, is provided with occlusion sensor means 30 for detecting an occlusion condition of the mouth 11 of the container 1.

The occlusion sensor means 30 comprises a phototransistor that is sensitive to the entire spectrum of light that is visible to the human eye. The relationship between illuminance and photocurrent is linear on a bilogarithmic reference. Thus an increase in illumination corresponds to a variation with a pattern of the elevation of power type on the photocurrent. The mouth occlusion condition 11 is recognised in the moment in which a phototransistor 30 detects a condition of total absence of light that is caused by the presence of one or more objects at the mouth 11. The sensor means 30, in one version, can comprise two or even more suitably positioned phototransistors in such a way as to prevent false signals due to undesired darkening due to dirt. In order to allow for the absence of light during the night, where there is no street lighting, it is possible, during the data processing phase, to schedule the data on the basis of night/day temporal cycles. The condition of occlusion of the mouth of the container 1 is detected by monitoring the reduction of the level of light in the containing cavity near the mouth 11. Luminosity values are acquired by the phototransistors at each capacitive measurement cycle performed by the conducting elements 10. When the luminosity level falls below a limit threshold, it means that the mouth
11 is obstructed and the dispatch of the data to the data collection and processing centre 3 is forced.

In order to prevent false start-ups, a procedure that excludes detecting luminosity at night is performable by the control unit 20, as mentioned above.

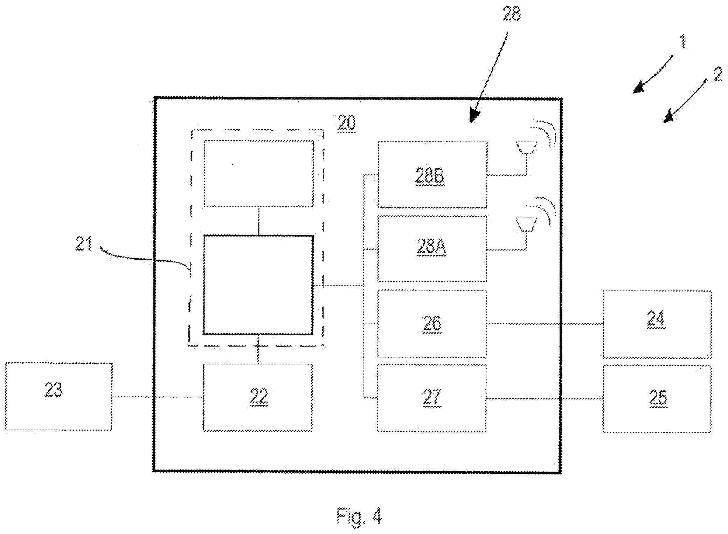

With reference to Figure 4, the control unit 20 included in the measuring device 2 is shown schematically. The control unit 20 comprises an electronic card provided with a CPU 21 that is supplied by a supply unit 22 by means of a battery 23.

The block 24 indicates the section of the measuring device 2 that includes the capacitive sensors 10, whilst the block 25 indicates the further section of the measuring device 2 that includes the occlusion sensor means 30. The capacitive sensors 10 and the occlusion sensor means 30 are connected to the CPU 21 by respective conditioning units 26 and 27. The CPU 21 manages all the sensors and is interfaced with a transmission unit 28 for transferring/receiving data to and from the data collection and processing centre 3. The transmission unit 28 may comprise a GPRS transmission module 28A and an RFID module 28B for identifying the container 1. There is now disclosed an algorithm for estimating the filling level that is implementable by the measuring device 2 according to the invention. The algorithm enables the measured data to be interpreted and processed by the sensors to supply the information on the state of the container 1. The information on the container can be: "completely empty", "full in the lower half", completely full", "full in the upper half but empty in the lower half" and "mouth occlusion".

In order to make the information supplied more rapid and solid, two distinct logic levels are provided: a logic level operating inside each container 1, and a further logic level operating inside the data collection and processing centre 3. The algorithm implemented inside the electronic card mounted on each container 1 decides when to send the data to the data collection and processing centre 3: the objective is to give as prompt warning as possible when a critical condition occurs (full, mouth occlusion). In order to do so, a first estimate of filling status is obtained.

Once the data have been received, the algorithm will then be implemented in the data collection and processing centre 3 to take the final decision on the filling status of the container 1, based also on the record of past measurements and by applying corrections if necessary.

The logic operating inside the single container 1 has the object of processing an estimate of filling status, in such a manner as to plan the dispatch of data (and thus transmit the updated information to the data collection and processing centre 3) as soon as a critical condition is detected (container in full state, mouth occlusion..). The data relating to the capacity measurements of both the lower level L1 and the higher level L2 are, once they are acquired, subjected to a first processing step P1 in which the so-called offset value is allowed for (which value will be disclosed below and is connected to a sensor setting and calibrating step) and a so-called CI threshold comparison with hysteresis is run, which is disclosed further on. The data are first interpreted singularly, to decide whether the read value corresponds to the presence of waste (full) or air (empty). The following step, indicated by the second step P2, provides for the expression of a concise rating for each complete level: this is done by combining suitably the status of the four plates 10 positioned on the same lower level L1 and the further four plates 10 positioned on the same higher level L2. Lastly, by considering also the past status of both levels L1 and L2 of the container 1, it is possible, in a third step P3, to make an estimate of current filling status. A possible method is disclosed more in detail in which the data are acquired.

Every 4 minutes, a complete measuring cycle is run in which:
- the values of the four capacities at the lower level L1 are acquired, (the measurement is repeated 10 times),
- the values of the four capacities at the higher level L2 are acquired, (the measurement is repeated 10 times),
- the average value of each capacity (i.e. the average of the values detected with the repeated measurements) are calculated.
- The resulting eight values (four for each level) are saved in a memory of the control unit 20 and are associated with the instant of time that identifies each particular measuring cycle.

When processing the data, as variations in electrical capacity in relation to the nominal "empty" value are interesting that are caused by the presence of waste interposed between le armatures, and not in relation to the absolute value arising from a measurement, it is important, before using a measured capacity value, to subtract the component relating to "empty" status (i.e. the value measured in the same zone as the container 1 but in conditions in which the container 1 contains only air, possibly only the bag and air) as mentioned above with reference to the first step PI.

This operation is conducted singularly on each of the eight aforesaid average values.

In the first step P1, the control unit 2 removes the "offset" component from the data that were acquired by the conducting elements 10. The data relating to the "offset" component that are used in this step are already available in the memory of the control unit 2 as the result of a previous transmission from the data collection and processing centre 3 to the control unit 2.

The data collection and processing centre 3 processes the appropriate "offset" values, which are sent at a certain regularity to the control unit 2. In this manner, the control unit 2, already before performing a capacitive measurement, is in possession of the offset component/s to be used according to what has just been said above.

In order to calculate these "offset" values, the data collection and processing centre 3 takes account of the historical trend of the data and updates the data whenever necessary.

The values of the "offset", which in other words indicates the shifting of a level of an electric signal with respect to a reference level, are obtained from the data collection and processing centre 3 automatically for each container periodically. The implemented method above all identifies the instants in which the container 1 in question is certainly empty. A container can, in a very reasonable manner, be considered to be empty in the instants immediately following emptying performed, for example, by an operator. Further, emptying a full container 1 causes a sudden variation in capacity parameters. Observing these phenomena shows how it is possible to estimate emptying by taking into consideration only the absolute capacity values between the plates and the speed at which they vary. Detecting a very sudden negative variation is correctly associated with a container 1 emptying operation. In this manner, it is thus possible to consider the last set of measurements as relating to the container 1 containing only air.

These values are saved by the data collection and processing centre 3 and sent to the container 1 to which they refer, in such a manner as to enable the respective control unit 20 to calculate correctly the capacity variations in relation to the empty condition.

More in detail, with reference to the CI threshold comparison step with hysteresis mentioned above, each aforesaid average value, once cleansed of the offset component, is compared with a suitable threshold value. This comparison is made by implementing a comparator with hysteresis: this means, the status associated with the container 1 is changed when the measured value exceeds a high threshold value; nevertheless, in order to return to the original status, it is not sufficient to return below this high threshold value, the measured value must be lower than a further low threshold value.

During operation, a capacitive measurement is conducted for each specific zone (central, peripheral, etc..) and for a specific level (lower level L1, or higher level L2), with a binary type logic (1, 0): the value "1" is assigned in the event of a "full", (i.e. if a determined capacitive threshold is exceeded) and the value "0" is assigned in the event of "air" or empty. At this point, such items of information are combined together in such a manner as to decide the overall status of the entire level (1=full, 0=empty).

The measurements of capacity between plates that are opposite one another provide information on the presence of waste prevalently in a central position, or which occupies a large part of the level. They are in general not very sensitive to the position of the waste. Thus, if both measurements made by activating the two pairs of opposite plates (i.e. the pairs of plates 10A-10C and 10B-10D) provide "full" information, the entire level is considered to be "full" with a very high degree of reliability.

The capacitive measurements between adjacent plates (for example the plates 10A-10B) on the other hand mainly detect variations in the edge vicinities. They are very sensitive to the shape and position of the waste, but can in some cases supplement the information of the measurements made with opposite plates.

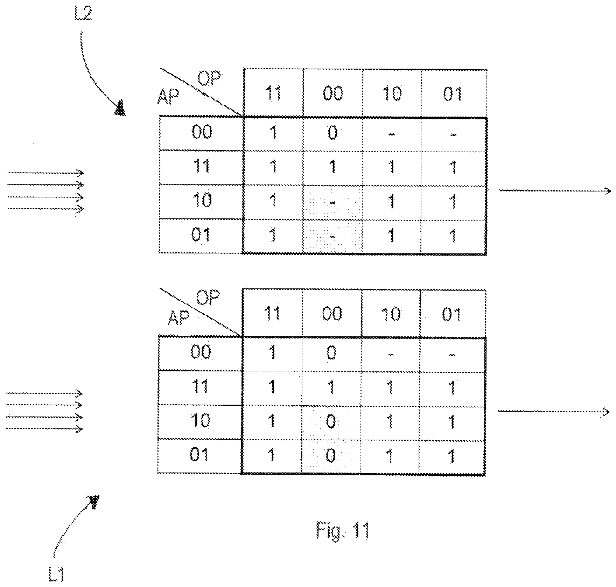

In Figure 11 (referring to the embodiment of measuring device 2 with four plates at the higher level L2 and four plates at the lower level L1,) a table is shown with all the possible combinations between the measurements taken and the relative status assigned to each level. The possible states of the container 1 that are detected by the pairs of opposite plates (indicated by "OP") or by the pairs of adjacent plates (indicated by "AP") can be "full for both pairs = 11", "empty for both pairs = 00", "full for one pair and empty for the other pair = 10, or 01".

From the comparison of the data provided by the pairs of adjacent plates with those of the pairs of opposite plates the statuses are determined that are to be assigned to each level. It is thus determined whether the container 1 is completely empty, totally full or full only in the top part or only in the lower part of the containing cavity 8.

Once the aforesaid data are obtained, the control unit 20 sends the data to the centre 3 by activating a GPRS communication procedure. Once the data have been transmitted, they are deleted from the local memory.

In addition to being activated by critical events (filling, emptying occlusion of the mouth), the dispatch of the data is programmed even if there has been no communication with the container 1 in the previous 24 hours.

The algorithm implemented inside the data collection and processing centre 3 is structured in a similar manner to the algorithm implemented in the control unit 20, with the difference that it also estimates and updates the offset values relating to the measurement of an "empty" state for every single container 1 located in the urban area.

One of the advantages of having a centralised logic, i.e. in the data collection and processing centre 3, is that in the latter all the data relating to the record of each container 1 are available and it is thus possible to extract useful information from the measurement trend (for example the offset value).

The system according to the invention attaches to a centralised logic also local logics of the algorithm, which are implemented by the respective control unit 20, that force the transmission of data at filling/emptying of the corresponding container, making management of the waste more efficient and reliable.

A suitable graphic interface enables the trend of various parameters to be shown (filling status of the skips, possible occlusion conditions of the mouth, failed dispatch of data) of each container 1.

Owing to the thus configured measuring device 2, it is possible to maintain a measurement of the filling of the container 1 that is effective and precise regardless of the nature and/or geometry and/or materials of which the waste consists. The measuring device 2 is very reliable in reporting the filling level of the containers 1, and prevents false negative signals on the status of the container 1 being generated.

With an appropriate arrangement of several armatures 10 and a processing algorithm of the signal/s supplied by the latter it is also possible to detect the shapes on the objects introduced into the containing cavity 8.

The measuring device 2 can also operate continuously. This may be useful for counting the number of objects/items of waste introduced into the container 1.

The measuring device 2, as disclosed above, is also able to detect the occlusion of the containing cavity 8 by bags or other bulky materials, regardless, of whether the filling threshold has been reached. This occlusion measurement can occur, alternatively to phototransistor light sensors, also with photocells placed inside the containing cavity 8.

By adding further external sensors it is possible to count the number of people in transit in the vicinity of the container 1.

The measuring device 2 is further configured for being fitted without problems on known containers that are already used for collecting waste. The measuring device 2 is able to be easily adapted to several types and sizes of known container having different geometrical shapes.

The measuring device 2 according to the invention is very cheap and also difficult to handle, so it is secure against vandalism.

The system 2 is easy to manage and is immediately understandable for all operators, both for those tasked with emptying the container means 1 and those who work remotely in the data collection and processing centre 3. The system 2 enables costs to be reduced because it optimises the waste collection cycle, and is for example particularly advantageous for local authorities. The quality of the container 1 emptying service is thus also improved, thus obtaining a cleaner town.

The above solution for measuring filling status and, in particular, the filling level of container means can be used not only in the field of waste management but also in many other applications and/or industrial settings. The solution disclosed above can be adapted to containers having any desired geometrical shape and dimensions.

Variations on and/or additions to what has been disclosed and illustrated in the attached drawings are possible.

## Claims

1. Measuring device (2) for detecting the filling status of a containing cavity (8) containing non-homogenous objects of various nature, said measuring device (2) comprising at least three conducting elements (10; 10A, 10B, 10C, 10D; 10E, 10F, 10G) each suitable for acting as capacitor armature, said at least three conducting elements (10) being connected to a control unit (20) such that said at least three conducting elements (10; 10A-D; 10E-G) can define armature plates of a capacitor, said at least three conducting elements (10; 10A-D; 10E-G) being arranged at a first measuring level defined in the direction of the height of the containing cavity (8), said at least three conducting elements (10; 10A-D; 10E-G) being distributed on the perimeter of the containing cavity (8) axial-symmetrically around a longitudinal axis (A) of the containing cavity (8) and being distributed circumferentially in an angularly uniform manner, said at least three conducting elements (10; 10A-D; 10E-G) being connected to the control unit (20) independently of one another, the control unit (20) configured to calculate the capacity variations caused when in the area between the armature plates defined by the conducting elements (10; 10A-D; 10E-G) an object of a different material from air is interposed to detect the filling status of the containing cavity (8).

2. Measuring device (2) according to claim 1, wherein said at least three conducting elements (10) and said control unit (20) are configured for detecting a multiplicity of various materials inside said containing cavity (8) by detecting the dielectric constant variation and/or the variation in the geometry of the equivalent capacity associated with said at least three conducting elements (10).

3. Measuring device (2) according to claim 1 or 2, comprising at least three conducting elements (10; 10E-G) on the first level (L2) and further at least three conducting elements (10; 10E-G) on a second level (L1), to detect a state of partial or total filling of said containing cavity (8), the conducting elements (10) associated with said first level (L2) and the conducting elements (10) associated with said second level (L1) being controllable and activatable by the control unit (20) independently of one another.

4. Measuring device (2) according to any one of claims 1 to 3, wherein said at least three conducting elements (10) comprise four conducting elements (10; 10A-D) on said first level (L2) and further comprise four conducting elements (10; 10A-D) on said second level (L1).

5. Measuring device (2) according to any preceding claim and comprising several groups of conducting elements (10), each group including a plurality of conducting elements (10), said groups being distributed in such a manner as to define a plurality of respective levels (L) such as to enable said control unit (20) to determine the filling status of multiple zones inside said containing cavity (8), each group of conducting elements (10) associated with a set level (L) being manageable autonomously and independently of the groups of conducting elements (10) associated with the other levels (L).

6. Measuring device (2) according to any preceding claim, wherein said at least three conducting elements comprise plate elements (10) positioned near said containing cavity (8) for detecting the variation in electric capacity caused by the presence of objects interposed between said plate elements (10), so as to determine said filling status.

7. Measuring device (2) according to any preceding claim, wherein said at least three conducting elements (10) operationally connected to said control unit (20) independently of one another are able to cooperate with a further conducting element (10) adjacent or opposite thereto so as to define respective capacitors that are able to recognise objects inside several zones at the same level (L; L1, L2).

8. Measuring device (2) according to any preceding claim, further comprising occlusion sensor means (30) that is positioned near a mouth (11) of said containing cavity (8) to detect an occlusion condition of the latter.

9. Measuring device (2) according to claim 8, wherein said occlusion sensor means (30) comprises one or more phototransistor optical sensor means (30) suitable for detecting an occlusion of said containing cavity (8) - caused, for example, by bags or other bulky objects - independently of the reaching of a filling threshold of said containing cavity (8).

10. Measuring device (2) according to any preceding claim, wherein said control unit (20) comprises wireless receiving/transmitting means (28A; 28B) for communicating with a data collection and processing centre (3), and a processor (21) for processing data and/or signals coming from said conducting elements (10) and/or from said data collection and processing centre (3).

11. Measuring device (2) according to any preceding claim, wherein said control unit (20) includes a hysteresis comparator by means of which a combined binary threshold (1/0) algorithm is implemented for recognising the filling status associated with each of the possible levels (L).

12. Container means (1) comprising a measuring device (2) according to any one of claims 1 to 11 and comprising a casing (7) bounding said containing cavity (8).

13. System (4) comprising one or more measuring devices (2) according to any one of claims 1 to 11 and a centre (3) configured for receiving and processing data supplied by said measuring devices (2).

14. System (4) according to claim 13, and operating by means of a logic that is implemented in said data collection and processing centre (3) and by means of a further logic that is implemented in the control units (20) provided inside each container (1) of said plurality of containers (1).

15. Use of the system (4) according to claim 13 or 14 for monitoring and managing urban refuse.

## Patentansprüche

1. Messvorrichtung (2) zum Erfassen des Füllzustandes eines Behältnishohlraums (8), der nicht-homogene Gegenstände von verschiedenartiger Beschaffenheit enthält, wobei die Messvorrichtung (2) zumindest drei leitfähige Elemente (10; 10A, 10B, 10C, 10D; 10E, 10F, 10G) aufweist, die jeweils geeignet sind, als Kondensatorbelag zu bewirken, wobei die zumindest drei leitfähigen Elemente (10) mit einer Steuereinheit (20) verbunden sind, derart, dass die zumindest drei leitfähigen Elemente (10; 10A-D; 10E-G) Belagplatten eines Kondensators definieren können, wobei die zumindest drei leitfähigen Elemente (10; 10A-D; 10E-G) auf einem ersten Messniveau angeordnet sind, das in der Richtung der Höhe des Behältnishohlraums (8) definiert ist, wobei die zumindest drei leitfähigen Elemente (10; 10A-D; 10E-G) an der Peripherie des Behältnishohlraums (8) axialsymmetrisch um eine Längsachse (A) des Behältnishohlraums (8) verteilt und umfänglich in gleichförmigem Winkelabstand verteilt sind, wobei die zumindest drei leitfähigen Elemente (10, 10A-D; 10E-G) mit der Steuereinheit (20) unabhängig voneinander verbunden sind, wobei die Steuereinheit (20) dazu ausgestaltet ist, die Kapazitätsänderungen zu berechnen, die verursacht werden, wenn in dem Bereich zwischen den Belagplatten, die durch die leitfähigen Elemente (10; 10A-D; 10E-G) definiert sind, ein Gegenstand aus einem von Luft verschiedenen Material angeordnet ist, um den Füllzustand des Behältnishohlraums (8) zu erfassen.

2. Messvorrichtung (2) nach Anspruch 1, wobei die zumindest drei leitfähigen Elemente (10) und die Steuereinheit (20) zum Erfassen einer Vielfalt von verschiedenartigen Materialien innerhalb des Behältnishohlraums (8) durch Erfassen der Änderung der dielektrischen Konstanten und/oder der Änderung in der Geometrie der Äquivalentkapazität, die mit den zumindest drei leitfähigen Elementen (10) verknüpft ist, ausgestaltet sind.

3. Messvorrichtung (2) nach Anspruch 1 oder 2, mit zumindest drei leitfähigen Elementen (10; 10E-G) auf dem ersten Niveau (L2) und weiterhin zumindest drei leitfähigen Elementen (10; 10E-G) auf einem zweiten Niveau (L1), um einen Zustand einer teilweisen oder vollständigen Befüllung des Behältnishohlraums (8) zu erfassen, wobei die leitfähigen Elemente (10), die mit dem ersten Niveau (L2) verknüpft sind, und die leitfähigen Elemente (10), die mit dem zweiten Niveau (L1) verknüpft sind, durch die Steuereinheit (20) unabhängig voneinander steuerbar und aktivierbar sind.

4. Messvorrichtung (2) nach irgendeinem der Ansprüche 1 bis 3, wobei die zumindest drei leitfähigen Elemente (10) vier leitfähige Elemente (10; 10A-D) auf dem ersten Niveau (L2) und weiterhin vier leitfähige Elemente (10; 10A-D) auf dem zweiten Niveau (L1) aufweisen.

5. Messvorrichtung (2) nach irgendeinem vorhergehenden Anspruch, und mit mehreren Gruppen von leitfähigen Elementen (10), wobei jede Gruppe eine Mehrzahl an leitfähigen Elementen (10) umfasst, wobei die Gruppen derart verteilt sind, dass eine Mehrzahl an jeweiligen Niveaus (L) definiert werden, derart, dass die Steuereinheit (20) den Füllzustand mehrerer Zonen innerhalb des Behältnishohlraums (8) bestimmen kann, wobei jede Gruppe von leitfähigen Elementen (10), die mit einem eingestellten Niveau (L) verknüpft sind, autonom und unabhängig von den Gruppen von leitfähigen Elementen (10), die mit den anderen Niveaus (L) verknüpft sind, handhabbar ist.

6. Messvorrichtung (2) nach irgendeinem vorhergehenden Anspruch, wobei die zumindest drei leitfähigen Elemente Plattenelemente (10) aufweisen, die nahe dem Behältnishohlraum (8) zum Erfassen der Änderung in elektrischer Kapazität positioniert sind, die durch das Vorhandensein von Gegenständen verursacht wird, die zwischen den Plattenelementen (10) angeordnet sind, um so den Füllzustand zu bestimmen.

7. Messvorrichtung (2) nach irgendeinem vorhergehenden Anspruch, wobei die zumindest drei leitfähigen Elemente (10), die mit der Steuereinheit (20) unabhängig voneinander wirkverbunden sind, in der Lage sind, mit einem weiteren leitfähigen Element (10) zusammenzuwirken, das zu diesen benachbart oder entgegengesetzt ist, um so jeweilige Kondensatoren zu definieren, die Gegenstände innerhalb mehrerer Zonen auf dem selben Niveau (L; L1, L2) erkennen können.

8. Messvorrichtung (2) nach irgendeinem vorhergehenden Anspruch, weiterhin mit Verstopfungssensormitteln (30), die nahe einer Öffnung (11) des Behältnishohlraums (8) positioniert sind, um einen Verstopfungszustand des Letzteren zu erfassen.

9. Messvorrichtung (2) nach Anspruch 8, wobei die Verstopfungssensormittel (30) einen oder mehrere optische Fototransistor-Sensormittel (30) aufweisen, die zum Erfassen einer Verstopfung des Behältnishohlraums (8) - die beispielsweise durch Taschen oder andere sperrige Gegenstände verursacht wird - unabhängig vom Erreichen eines Füllschwellwertes des Behältnishohlraums (8) geeignet sind.

10. Messvorrichtung (2) nach irgendeinem vorhergehenden Anspruch, wobei die Steuereinheit (20) drahtlose Empfänger-/Sendermittel (28A; 28B) zum Kommunizieren mit einem Datensammel- und- verarbeitungszentrum (3) und einen Prozessor (21) zum Verarbeiten von Daten und/oder Signalen aufweist, die von den leitfähigen Elementen (10) und/oder von dem Datensammel- und - verarbeitungszentrum (3) kommen.

11. Messvorrichtung (2) nach irgendeinem vorhergehenden Anspruch, wobei die Steuereinheit (20) einen Hysteresekomparator umfasst, mittels dem ein kombinierter binärer Schwellwert (1/0)- Algorithmus zum Erkennen des Füllzustandes implementiert ist, der mit jedem der möglichen Niveaus (L) verknüpft ist.

12. Behältermittel (1) mit einer Messvorrichtung (2) nach irgendeinem der Ansprüche 1 bis 11 und mit einem Gehäuse (7), das den Behältnishohlraum (8) umgrenzt.

13. System (4) mit einer oder mehreren Messvorrichtungen (2) nach irgendeinem der Ansprüche 1 bis 11 und einem Zentrum (3), das zum Empfangen und Verarbeiten von Daten, die von den Messvorrichtungen (2) zugeführt werden, ausgestaltet ist.

14. System (4) nach Anspruch 13, und das mittels einer Logik, die in dem Datensammel- und -verarbeitungszentrum (3) implementiert ist, und mittels einer weiteren Logik arbeitet, die in den Steuereinheiten (20) implementiert ist, die innerhalb jedes Behälters (1) der Mehrzahl an Behältern (1) vorgesehen sind.

15. Verwendung des Systems (4) nach Anspruch 13 oder 14 zum Überwachen und Handhaben von städtischem Abfall.

## Revendications

1. Dispositif de mesure (2) pour détecter l'état de remplissage d'une cavité contenante (8) contenant des objets non homogènes de nature variée, ledit dispositif de mesure (2) comprenant au moins trois éléments conducteurs (10 ; 10A, 10B, 10C, 10D ; 10E, 10F, 10G) chacun apte à servir d'armature de condensateur, lesdits au moins trois éléments conducteurs (10) étant connectés à une unité de commande (20) de sorte que lesdits au moins trois éléments conducteurs (10 ; 10A-D ; 10E-G) peuvent définir des plaques d'armature d'un condensateur, lesdits au moins trois éléments conducteurs (10 ; 10A-D ; 10E-G) étant agencés à un premier niveau de mesure défini dans le sens de la hauteur de la cavité contenante (8), lesdits au moins trois éléments conducteurs (10 ; 10AD ; 10E-G) étant répartis sur le périmètre de la cavité contenante (8) de manière axialement symétrique autour d'un axe longitudinal (A) de la cavité contenante (8) et étant répartis circonférentiellement de manière angulairement uniforme, lesdits au moins trois éléments conducteurs (10 ; 10A-D ; 10E-G) étant connectés à l'unité de commande (20) indépendamment les uns des autres, l'unité de commande (20) étant configurée pour calculer les variations de capacité causées lorsque dans la zone entre les plaques d'armature définies par les éléments conducteurs (10 ; 10A-D ; 10E-G) un objet dans un matériau différent de l'air est interposé pour détecter l'état de remplissage de la cavité contenante (8).

2. Dispositif de mesure (2) selon la revendication 1, dans lequel lesdits au moins trois éléments conducteurs (10) et ladite unité de commande (20) sont configurés pour détecter une multiplicité de matériaux divers à l'intérieur de ladite cavité contenante (8) par la détection de la variation de la constante diélectrique et/ou de la variation de la géométrie de la capacité équivalente associée auxdits au moins trois éléments conducteurs (10).

3. Dispositif de mesure (2) selon la revendication 1 ou 2, comprenant au moins trois éléments conducteurs (10 ; 10E-G) au premier niveau (L2) et en outre au moins trois éléments conducteurs (10 ; 10E-G) à un second niveau (L1), pour détecter un état de remplissage partiel ou total de ladite cavité de contenance (8), les éléments conducteurs (10) associés audit premier niveau (L2) et les éléments conducteurs (10) associés audit second niveau (L1) pouvant être commandés et activés par l'unité de commande (20) indépendamment les uns des autres.

4. Dispositif de mesure (2) selon l'une quelconque des revendications 1 à 3, dans lequel lesdits au moins trois éléments conducteurs (10) comprennent quatre éléments conducteurs (10 ; 10A-D) audit premier niveau (L2) et comprennent en outre quatre éléments conducteurs (10 ; 10A-D) audit second niveau (L1).

5. Dispositif de mesure (2) selon l'une quelconque des revendications précédentes et comprenant plusieurs groupes d'éléments conducteurs (10), chaque groupe comprenant une pluralité d'éléments conducteurs (10), lesdits groupes étant répartis de manière à définir une pluralité de niveaux respectifs (L) de manière à permettre à ladite unité de commande (20) de déterminer l'état de remplissage de multiples zones à l'intérieur de ladite cavité contenante (8), chaque groupe d'éléments conducteurs (10) associé à un niveau déterminé (L) pouvant être géré de manière autonome et indépendante des groupes d'éléments conducteurs (10) associés aux autres niveaux (L).

6. Dispositif de mesure (2) selon l'une quelconque des revendications précédentes, dans lequel lesdits au moins trois éléments conducteurs comprennent des éléments de plaques (10) positionnés à proximité de ladite cavité contenante (8) pour détecter la variation de capacité électrique causée par la présence d'objets interposés entre lesdits éléments de plaques (10), afin de déterminer ledit état de remplissage.

7. Dispositif de mesure (2) selon l'une quelconque des revendications précédentes, dans lequel lesdits au moins trois éléments conducteurs (10) reliés opérationnellement à ladite unité de commande (20) indépendamment les uns des autres peuvent coopérer avec un autre élément conducteur (10) adjacent ou opposé à ceux-ci de manière à définir des condensateurs respectifs qui sont capables de reconnaître des objets à l'intérieur de plusieurs zones au même niveau (L ; L1, L2).

8. Dispositif de mesure (2) selon l'une quelconque des revendications précédentes, comprenant en outre des moyens de capteur d'occlusion (30) qui sont positionnés à proximité d'une embouchure (11) de ladite cavité contenante (8) pour détecter un état d'occlusion de celle-ci.

9. Dispositif de mesure (2) selon la revendication 8, dans lequel lesdits moyens de capteur d'occlusion (30) comprennent un ou plusieurs moyens de capteur optique à phototransistor (30) aptes à détecter une occlusion de ladite cavité contenante (8) - causée, par exemple, par des sacs ou d'autres objets volumineux - indépendamment de l'atteinte d'un seuil de remplissage de ladite cavité contenante (8).

10. Dispositif de mesure (2) selon l'une quelconque des revendications précédentes, dans lequel ladite unité de commande (20) comprend des moyens de réception/transmission sans fil (28A ; 28B) pour communiquer avec un centre de collecte et de traitement de données (3), et un processeur (21) pour traiter les données et/ou les signaux provenant desdits éléments conducteurs (10) et/ou dudit centre de collecte et de traitement de données (3).

11. Dispositif de mesure (2) selon l'une quelconque des revendications précédentes, dans lequel ladite unité de commande (20) comprend un comparateur à hystérésis au moyen duquel un algorithme à seuil binaire combiné (1/0) est mis en oeuvre pour reconnaître l'état de remplissage associé à chacun des niveaux possibles (L).

12. Contenant (1) comprenant un dispositif de mesure (2) selon l'une quelconque des revendications 1 à 11 et comprenant un boîtier (7) délimitant ladite cavité contenante (8).

13. Système (4) comprenant un ou plusieurs dispositifs de mesure (2) selon l'une quelconque des revendications 1 à 11 et un centre (3) configuré pour recevoir et traiter les données fournies par lesdits dispositifs de mesure (2).

14. Système (4) selon la revendication 13, et fonctionnant au moyen d'une logique qui est mise en oeuvre dans ledit centre de collecte et de traitement de données (3) et au moyen d'une autre logique qui est mise en oeuvre dans les unités de commande (20) prévues à l'intérieur de chaque contenant (1) de ladite pluralité de contenants (1).

15. Utilisation du système (4) selon la revendication 13 ou 14 de surveillance et de gestion de déchets urbains.
